# EUROPÄISCHE PATENTSCHRIFT

(11) **EP 3 586 414 B1**
(45) Veröffentlichungstag und Bekanntmachung des Hinweises auf die Patenterteilung: **28.04.2021**
(21) Anmeldenummer: 18716950.3
(22) Anmeldetag: 29.03.2018
(51) Int. Cl.: H02B 13/035, H02B 13/045

(54) **VERBESSERTER GASBEHÄLTER FÜR SCHALTANLAGEN UND SCHALTANLAGE MIT EINEM SOLCHEN VERBESSERTEN GASBEHÄLTER**
IMPROVED GAS TANK FOR SWITCHGEAR AND SWITCHGEAR WITH SUCH AN IMPROVED GAS TANK
RÉSERVOIR DE GAZ AMÉLIORÉ POUR APPAREILLAGE DE COMMUTATION ET APPAREILLAGE DE COMMUTATION AVEC UN TEL RÉSERVOIR

(30) Priorität: 21.04.2017 DE 102017206733
(43) Veröffentlichungstag der Anmeldung: 01.01.2020
(73) Patentinhaber: Siemens Aktiengesellschaft, 80333 München (DE)
(72) Erfinder: JUNKER, Guido, 63486 Bruchkoebel (DE); LINK, Thomas, 63067 Offenbach am Main (DE); NITSCHE, Jörg, 63477 Maintal (DE)
(86) Internationale Anmeldenummer: PCT/EP2018/058087
(87) Internationale Veröffentlichungsnummer: WO 2018/192760

(56) Entgegenhaltungen:
- WO-A1-2007/137976
- CN-U- 205 051 240
- CN-U- 206 041 331
- DE-A1- 19 540 493
- DE-A1-102007 045 486

## Beschreibung

Die Erfindung bezieht sich auf einen Gasbehälter für Schaltanlagen, insbesondere Mittelspannungsschaltanlagen und Hochspannungsschaltanlagen, eine Schaltanlage mit einem solchen Gasbehälter, und ein Herstellungsverfahren für einen Gasbehälter.

Aus dem Stand der Technik ist die WO2007137976A1 bekannt, die ein Anschlussfeld für Mittelspannungsanlagen mit einer ersten und einer zweiten Einspeisevorrichtung umfasst.

Die DE19540493A1 offenbart eine Vorrichtung zur Befestigung von Spannungswandlern in Mittelspannungsanlagen mittels Profilwinkelschienen, und offenbart den Oberbegriff des Anspruchs 1.

In der DE102007045486A1 wird eine modulare Schaltanlage zur Energieverteilung offenbart mit Trennwände zwischen Durchführungen und Stromschienen auf einem Gasbehälter.

Im Stand der Technik sind Mittelspannungsschaltanlagen und Hochspannungsschaltanlagen bekannt, die mit einem Isoliergas betrieben werden, wobei das Isoliergas sich in einem Gasbehälter befindet, der im befüllten Zustand unter einem Überdruck steht. Der Gasbehälter kann verschiedene Einbauten aufweisen, z. B. einen Trennschalter zusammen mit einem Leistungsschalter und/oder Lastschalter. Die Einbauten in einem solchen Gasbehälter werden über Sammelscheinen elektrisch mit weiteren Schaltfeldern und/oder Anordnung und/oder Abgängen verbunden. Die Montage der Sammelschienen erfolgt häufig beim Kunden, wobei aus technischen Gründen für die Sammelschienen nur eine sehr geringe Toleranz in Bezug auf die Sammelschienenlänge vorgesehen ist. Insbesondere sind Toleranzen in Bezug auf die Sammelschienenlänge häufig auf weniger als 0,4 % beschränkt. Das bedeutet, dass bei einer Sammelschienenlänge von 600 mm eine maximale Abweichung, Toleranz, von 2,0 mm möglich ist. Bei der Aufstellung eines Feldverbundes von mehreren Feldern, z. B. zehn aneinandergereihte Felder, kann es immer wieder zu Schwierigkeiten bei der Sammelschienenmontage bekommen, da aufgrund einer Schiefstellung einer Sammelschienendurchführung aus dem Inneren des Gasbehälters an den Sammelschienenanschluss an der Außenseite des Gasbehälters kommen. Diese Schiefstellung der Sammelschienendurchführung, allgemeiner einer elektrisch leitenden Durchführung, entsteht u. a. die Druckbeaufschlagung des Gasbehälters.

Maßabweichungen können insbesondere im Zusammenspiel mit einer stärkeren Schiefstellung der Sammelschienendurchführung dazu führen, dass die Montage der Sammelschienenschienen nicht mehr möglich ist.

Herkömmliche Gasbehälter versuchen das Problem der Durchführungsschiefstellung durch im Gasbehälter angeordnete Versteifungselemente zu reduzieren, was zu zu geringen Bauteilabständen im Gasbehälter führen kann, die so dielektrische Probleme verursachen.

Ein weiteres Problem herkömmlicher Gasbehälter ist, dass für die Montage weiterer Geräte, wie Stromwandler und Spannungswandler, und weiterer Anschlüsse, wie Erdungsanschlüsse, am Gasbehälter, insbesondere an der Behälterdecke, einzelne Aufnahmevorrichtungen und Anschlussvorrichtungen vorgesehen sind, welche häufig einzeln angeordnet werden müssen. Solche Aufnahmevorrichtungen und Anschlussvorrichtungen können bspw. in angeschweißten Bolzen, insbesondere an der Außenseite der Behälterdecke, bestehen. Solche angeschweißten Bolzen sind i. d. R. nicht automatisiert verschweißbar und führen so zu einem stark erhöhten Arbeitsaufwand. Dieser erhöhte Arbeitsaufwand ist insbesondere bei der Verwendung von Schweißschablonen und/oder Bolzenschussgeräten begründet.

Insbesondere führen handgeschweißte Bolzen zu einer erhöhten Fehlerrate in Bezug auf die Positionierung und Haltbarkeit. Auch können solche Bolzen schlicht vergessen werden. Der Stand der Technik behilft in Bezug auf den Aufbau einen Feldverbundes mittels Sammelschienen mit der Verwendung von Messingplättchen, die der Einhaltung des richtigen Abstands der Sammelschienen dienen. Sind die Abstände zwischen zwei Feldern allerdings zu groß, so ist nur eine Verwendung von teuren Sonderlängen der Sammelschienen möglich.

Aufgabe der Erfindung ist es nun diese Nachteile des Standes der Technik zu beheben und einen verbesserten Gasbehälter bereitzustellen, der einfacher, zuverlässiger und günstiger zu produzieren ist.

Die Erfindung löst diese Aufgaben durch einen Gasbehälter für Schaltanlagen gemäß dem Anspruch 1, eine Schaltanlage gemäß dem Anspruch 9 und den von dem unabhängigen Anspruch abhängigen Ansprüchen.

Ein Ausführungsbeispiel bezieht sich auf einen Gasbehälter für Schaltanlagen, wobei der Gasbehälter für die Beaufschlagung mit einem Überdruck im Innern des Gasbehälters gegenüber dem Umgebungsdruck außerhalb des Gasbehälters ausgestaltet ist und der Gasbehälter zwei oder mehr elektrisch leitende Durchführungen aufweist, wobei die mindestens zwei elektrisch leitenden Durchführungen voneinander elektrisch isoliert am Gasbehälter angeordnet sind und mindestens eine Durchführung der mindestens zwei elektrisch leitenden Durchführungen an einem Deckensegment des Gasbehälters angeordnet ist, wobei am Außenbereich des Deckensegmentes ein Montageelement befestigt ist, wobei das Montageelement zwei oder mehr Längselemente aufweist, die sich in mindestens einer Richtung, also einer oder mehr Raumrichtungen, über das gesamte Deckensegment erstrecken, die Längselemente durch zwei oder mehr Querelemente verbunden sind, und
die mindestens eine elektrisch leitende Durchführung der mindestens zwei elektrisch leitenden Durchführungen zwischen zwei Querelementen der zwei oder mehr Querelementen angeordnet ist. Das Montageelement weist zwei oder mehr Ankerelemente auf, die sich jeweils von oberhalb des Deckensegmentes, also in dem Außenbereich des Deckensegmentes, entlang eines Teils von einer oder mehrerer Seitenflächen des Gasbehälters erstrecken, wobei das Montageelement eine Versteifung des Gasbehälters bewirkt. Die zwei oder mehr Ankerelemente sind jeweils fest mit einem Teil von einer oder mehrerer Seitenflächen des Gasbehälters verbunden. Das Montageelement weist eine oder mehr Aufnahmen für Wandler und/oder Sammelschienen auf.

Bevorzugt wird, dass das Montageelement zwei Längselementen und drei oder vier Querelemente aufweist.

Bevorzugt wird auch, dass die feste Verbindung zwischen den zwei oder mehr Ankerelementen und der einen oder den mehreren Seitenflächen des Gasbehälters eine Schweißverbindung, eine Schraubverbindung oder eine genietete Verbindung oder eine Kombination der genannten Verbindungen ist.

Auch wird bevorzugt, dass zwei oder mehr Ankerelemente der zwei oder mehr Ankerelemente jeweils mit einem der zwei oder mehr Längselemente verbunden sind und mindestens eines der zwei oder mehr Ankerelemente mittels eines Verbindungselementes mit jeweils einem der zwei oder mehr Querelemente verbunden ist.

Bevorzugt wird, dass das Deckensegment auf der in den Innenbereich des Deckensegmentes gerichteten Seite des Gasbehälters keine Verstrebungselemente enthält, die sich entlang des Deckensegmentes von einer Seitenfläche des Gasbehälters zu einer weiteren Seitenfläche des Gasbehälters erstrecken.

Auch wird bevorzugt, dass das Montageelement zwei oder mehr Transportelemente aufweist, insbesondere zum Transport des Gasbehälters (10).

Bevorzugt wird, dass der Gasbehälter aus Metall und/oder einer Metalllegierung gebildet wird und dass die zwei oder mehr Durchführungen mittels eines elektrisch isolierenden Isolierelementes mit dem Gasbehälter verbunden werden.

Bevorzugt wird auch, dass der Gasbehälter mit einem Isoliergas befüllt oder befüllbar ist und dass das Isoliergas eines oder mehrere der folgenden Gase aufweist SF6 und/oder ein oder mehrere Fluorketone und/oder ein oder mehrere Nitrile, insbesondere fluorierte Nitrile und/oder Stickstoff und/oder Kohlendioxid und/oder Sauerstoff und/oder trockene Luft und/oder ein oder mehrere Olefine und/oder ein oder mehrere Oxirane, insbesondere fluorierte Oxirane.

Auch wird Schaltanlage 1 mit einem Gasbehälter nach den vorstehenden Ausführungen bevorzugt.

Im Folgenden wird der Erfindungsgegenstand anhand von Figuren näher erläutert:
- Figur 1:: schematische Seitenansicht einer Schaltanlage mit einem erfindungsgemäßen Gasbehälter;
- Figur 2:: perspektivische schematische Darstellung einer Schaltanlage mit einem erfindungsgemäßen Gasbehälter;
- Figur 3:: Darstellung eines Montageelements für einen Gasbehälter;
- Figur 4:: schematische Darstellung eines erfindungsgemäßen Gasbehälters mit einem Montageelement.

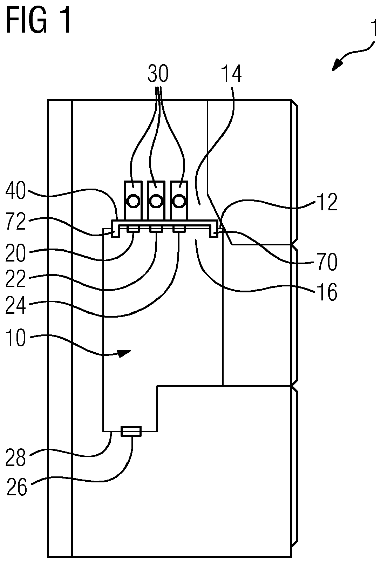

Die Figur 1 zeigt eine Schaltanlage 1 in einer Seitenansicht ohne eine Seitenabdeckung, sodass der Gasbehälter 10 erkennbar ist. Der Gasbehälter 10 weist ein Deckensegment 12 auf, auf dem ein Montageelement 40 befestigt ist. Das Montagelement 40 ist fest mit dem Gasbehälter 10 verbunden. Das Montageelement 40 bewirkt dabei eine Versteifung des Gasbehälters 10 im Bereich des Deckensegments 12. In dem hier gezeigten Beispiel wird das Montageelement 40 mittels der Ankerelemente 70, 72 mit oder auch mit den Seitenwänden des Gasbehälters fest verbunden.

Der hier gezeigte Gasbehälter 10 weist im Bereich des Deckensegments 12 drei elektrisch leitende Durchführungen 20, 22, 24 auf. An diesen elektrisch leitenden Durchführungen 20, 22, 24 am Deckensegment 12 des Gasbehälters 10 sind in diesem Beispiel Aufnahmen 30 für Wandler und Sammelschienen befestigt. Die Aufnahmen 30 für Wandler und Sammelschienen sitzen also, wie das Montageelement 40, im Außenbereich 14 des Deckensegments 12 vom Gasbehälter 10. Alternativ werden die Wandler auf nicht gezeigten Wandlertragblechen montiert, die auf den Längselementen 50, 52 und/oder Querelementen 60, 62, 64, 66 und/oder Verbindungselementen 80, 82, 84, 86 angeordnet und/oder mit einen oder mehreren dieser verbunden angeordnet sind.

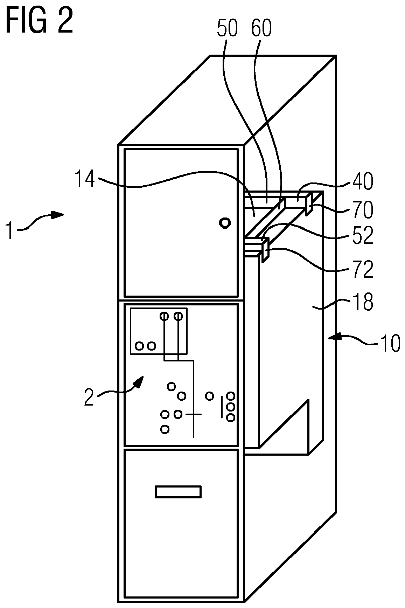

Außerdem weist der hier gezeigte Gasbehälter 10 eine optionale elektrisch leitende Durchführung 26 am Bodenbereich 28 des Gasbehälters 10 auf. Weitere Einbauten der Schaltanlage, wie Sammelschienen, Erdungskabel, Antriebe und mechanischen Verbindungen sind der Übersichtlichkeit halber in der Figur 1 und auch in der folgenden Figur 2 nicht dargestellt.

Die Figur 2 zeigt eine perspektivische schematische Darstellung einer Schaltanlage 1 mit einer Frontseite 2 der Schaltanlage 1 und den Gasbehälter 10. Der Übersichtlichkeit halber wurde auf die Darstellung weiterer typischer Einbauten einer Schaltanlage in der Figur 2 verzichtet.

Der Gasbehälter 10 der Schaltanlage 1 weist im Außenbereich 14 des Deckensegments 12 ein Montageelement 40 auf, von dem aufgrund der perspektivischen Darstellung zwei Längselemente 50, 52 und ein Querelement 60 erkennbar sind. Des Weiteren ist erkennbar, dass das Montageelement 40 über zwei Ankerelemente 70, 72 verfügt, die das Montageelement 40 auch mit einer Seitenfläche 18 des Gasbehälters 10 verbinden.

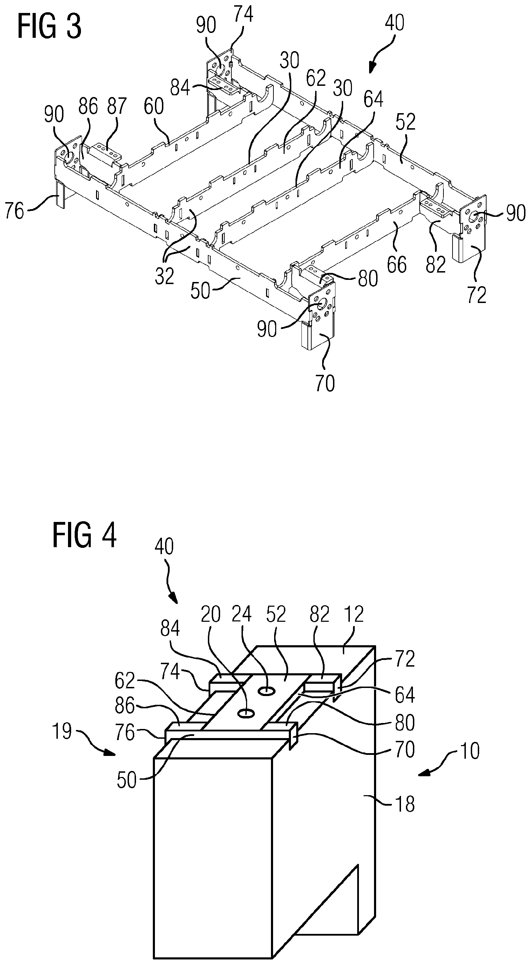

Die Figur 3 zeigt eine schematische Darstellung eines Montageelementes 40 ohne einen Gasbehälter 10. Das Montageelement 40 ist hier beispielhaft aus zwei Längselementen 50, 52 aufgebaut und verfügt über vier Querelemente 60, 62, 64, 66. Die Längselemente 50, 52 weisen an ihren Enden je zwei Ankerelemente 70, 72, 74, 76 auf, die über Verbindungselemente 80, 82, 84, 86 jeweils entweder mit dem Querelement 60 oder dem Querelement 66 verbunden werden. Dieser Aufbau ermöglicht einerseits eine ausreichende Versteifung des Gasbehälters 10, bei gleichzeitiger Bereitstellung von Aufnahmen 30 für Wandler und/oder Sammelschienen. Die zahlreichen Befestigungsaufnahmen 32 sind hier beispielhaft nur zwei mit Bezugszeichen versehen.

Außerdem weist das Montageelement 40 Transportelemente 90, an denen der mit dem Montageelement 40 fest verbundene Gasbehälter 10 sicher transportiert werden kann. Dazu können die Transportelemente 90 bspw. direkt als Aufnahme für Transporthaken dienen oder aber Transportösen oder andere Transporthilfsmittel an den Transportelementen 90 befestigt werden. Anhand des Verbindungselements 86 ist beispielhaft ein Ansatzelement 87 gezeigt, das so auch an den anderen Verbindungselementen 80, 82, 84 vorhanden sein kann. Mit den Ansatzelementen 87 können bspw. weitere Aufbauten oder Stützelemente für Aufbauten und/oder Verankerungselemente für weitere Aufbauten an dem Montageelement 40 über die Verbindungselemente 80, 82, 84, 86 verbunden werden. Das oder die Ansatzelemente 87 eignen sich zum Anschluss einer nicht gezeigten Erdverbindung oder zur Montage weiterer Bauteile, wie einem nicht gezeigten Wandlertragblech.

Die Figur 4 zeigt eine schematische Darstellung eines Gasbehälters 10. Auf dem Deckensegment 12 des Gasbehälters 10 ist ein Montageelement 40 fest angeordnet, also mit dem Gasbehälter 10 fest verbunden, bevorzugt durch Verschweißen und oder verschrauben.

Der hier gezeigte Gasbehälter 10 weist hier am Deckensegment 12 zwei elektrisch leitende Durchführungen 20, 24 auf, wobei auch eine andere Anzahl, wie z. B. eine elektrisch leitende Durchführung oder drei elektrisch leitende Durchführungen möglich sind.

Das hier gezeigte Montageelement 40 besteht aus zwei Längselementen 50, 52, zwei Querelementen 62, 64 und vier Verbindungselementen 80, 82, 84, 86. Außerdem weist das Montageelement 40 vier Ankerelemente 70, 72, 74, 76 auf, die sich vom Außenbereich 14 des Deckensegments 12 vom Gasbehälter 10 auf eine Seitenfläche 18 des Gasbehälters 10 oder eine weitere Seitenfläche 19 des Gasbehälters 10 erstrecken. Die Verbindungselemente 80, 82, 84, 86 des Montageelements 40 sind bevorzugt mit der ersten Seitenfläche 18 des Gasbehälters 10 oder der weiteren Seitenfläche 19 des Gasbehälters 10 fest verbunden, insbesondere verschweißt oder verschraubt oder vernietet.

### Bezugszeichenliste

- 1: Schaltanlage
- 2: Front, Frontseite der Schaltanlage 1
- 10: Gasbehälter
- 12: Deckensegment des Gasbehälters 10
- 14: Außenbereich des Deckensegmentes 12 vom Gasbehälter 10
- 16: Innenbereich des Deckensegmentes 12 vom Gasbehälter 10
- 18: eine Seitenfläche des Gasbehälters 10
- 19: weiteren Seitenfläche (19) des Gasbehälters (10)
- 20: elektrisch leitende Durchführung am Deckensegment 12 des Gasbehälters 10
- 22: elektrisch leitende Durchführung am Deckensegment 12 des Gasbehälters 10
- 24: elektrisch leitende Durchführung am Deckensegment 12 des Gasbehälters 10
- 26: elektrisch leitende Durchführung am Bodenbereich 28 des Gasbehälters 10
- 28: Bodenbereich des Gasbehälters 10
- 30: Aufnahme für Wandler und/oder Sammelschienen;
- 32: Befestigungsaufnahmen;
- 40: Montageelement
- 50: Längselement des Montageelementes 40
- 52: Längselement des Montageelementes 40
- 60: Querelement des Montageelementes 40
- 62: Querelement des Montageelementes 40
- 64: Querelement des Montageelementes 40
- 66: Querelement des Montageelementes 40
- 70: Ankerelement des Montageelementes 40
- 72: Ankerelement des Montageelementes 40
- 74: Ankerelement des Montageelementes 40
- 76: Ankerelement des Montageelementes 40
- 80: Verbindungselement des Montageelementes 40
- 82: Verbindungselement des Montageelementes 40
- 84: Verbindungselement des Montageelementes 40
- 86: Verbindungselement des Montageelementes 40
- 87: Ansatzelement
- 90: Transportelemente des Montageelementes 40

## Patentansprüche

1. Gasbehälter (10) für Schaltanlagen (1), wobei der Gasbehälter (10) für die Beaufschlagung mit einem Überdruck im Innern des Gasbehälters (10) gegenüber dem Umgebungsdruck außerhalb des Gasbehälters (10) ausgestaltet ist und der Gasbehälter (10) zwei oder mehr elektrisch leitende Durchführungen (20, 22, 24, 26) aufweist, wobei die mindestens zwei elektrisch leitenden Durchführungen (20, 22, 24, 26) voneinander elektrisch isoliert am Gasbehälter (10) angeordnet sind und mindestens eine Durchführung (20, 22, 24) der mindestens zwei elektrisch leitenden Durchführungen (20, 22, 24, 26) an einem Deckensegment (12) des Gasbehälters (10) angeordnet ist, wobei
am Außenbereich (14) des Deckensegmentes (12) ein Montageelement (40) befestigt ist, wobei das Montageelement (40) zwei oder mehr Längselemente (50, 52) aufweist, die sich in mindestens einer Richtung über das gesamte Deckensegment (12) erstrecken, die Längselemente (50, 52) durch zwei oder mehr Querelemente (60, 62, 64, 66) verbunden sind, und
die mindestens eine elektrisch leitende Durchführung der mindestens zwei elektrisch leitenden Durchführungen zwischen zwei Querelementen (60, 62, 64, 66) der zwei oder mehr Querelementen (60, 62, 64, 66) angeordnet ist wobei das Montageelement (40) eine oder mehrere Aufnahmen (30) für Wandler und/ oder Sammelschienen aufweist, **dadurch gekennzeichnet, dass** das Montageelement (40) zwei oder mehr Ankerelemente (70, 72, 74, 76) aufweist, die sich jeweils von oberhalb des Deckensegmentes (12) entlang eines Teils von einer oder mehrerer Seitenflächen (18) des Gasbehälters (10) erstrecken, und die zwei oder mehr Ankerelemente (70, 72, 74, 76) jeweils fest mit einem Teil von einer oder mehrerer Seitenflächen (18) des Gasbehälters (10) verbunden sind, wobei das Montageelement (40) eine Versteifung des Gasbehälters (10) im Bereich des Deckensegmentes (12) bewirkt.

2. Gasbehälter (10) nach Anspruch 1,
**dadurch gekennzeichnet, dass**
das Montageelement (40) zwei Längselementen (50, 52) und drei oder vier Querelemente (60, 62, 64, 66) aufweist.

3. Gasbehälter (10) nach Anspruch 1 oder 2,
**dadurch gekennzeichnet, dass**
die feste Verbindung zwischen den zwei oder mehr Ankerelementen (70, 72, 74, 76) und der einen oder den mehreren Seitenflächen (18) des Gasbehälters (10) eine Schweißverbindung, eine Schraubverbindung oder eine genietete Verbindung oder eine Kombination der genannten Verbindungen ist.

4. Gasbehälter (10) nach einem oder mehreren der vorstehenden Ansprüche 1 bis 3,
**dadurch gekennzeichnet, dass**
zwei oder mehr Ankerelemente (70, 72, 74, 76) der zwei oder mehr Ankerelemente (70, 72, 74, 76) jeweils mit einem der zwei oder mehr Längselemente verbunden sind und mindestens eines der zwei oder mehr Ankerelemente (70, 72, 74, 76) mittels eines Verbindungselementes (80, 82, 84, 86) mit jeweils einem der zwei oder mehr Querelemente (60, 62, 64, 66) verbunden ist.

5. Gasbehälter (10) nach einem oder mehreren der vorstehenden Ansprüche,
**dadurch gekennzeichnet, dass**
das Deckensegment (12) auf der in den Innenbereich des Deckensegmentes (12) gerichteten Seite des Gasbehälters (10) keine Verstrebungselemente (4) enthält, die sich entlang des Deckensegmentes (12) von einer Seitenfläche (18) des Gasbehälters (10) zu einer weiteren Seitenfläche (19) des Gasbehälters (10) erstrecken.

6. Gasbehälter (10) nach einem oder mehreren der vorstehenden Ansprüche,
**dadurch gekennzeichnet, dass**
das Montageelement (40) zwei oder mehr Transportelemente (90) aufweist.

7. Gasbehälter (10) nach einem oder mehreren der vorstehenden Ansprüche,
**dadurch gekennzeichnet, dass**
der Gasbehälter (10) aus Metall und/oder einer Metalllegierung gebildet wird und dass die zwei oder mehr Durchführungen (20, 22, 24, 26) mittels eines elektrisch isolierenden Isolierelementes mit dem Gasbehälter (10) verbunden werden.

8. Gasbehälter (10) nach einem oder mehreren der vorstehenden Ansprüche,
**dadurch gekennzeichnet, dass**
der Gasbehälter (10) mit einem Isoliergas befüllt oder befüllbar ist und dass das Isoliergas eines oder mehrere der folgenden Gase aufweist SF6 und/oder ein oder mehrere Fluorketone und/oder ein oder mehrere Nitrile, insbesondere fluorierte Nitrile und/oder Stickstoff und/oder Kohlendioxid und/oder Sauerstoff und/oder trockene Luft und/oder ein oder mehrere Olefine und/oder ein oder mehrere Oxirane, insbesondere fluorierte Oxirane.

9. Schaltanlage (1) mit einem Gasbehälter (10) nach einem oder mehreren der vorstehenden Ansprüche.

## Claims

1. Gas tank (10) for switchgear (1), wherein the gas tank (10) is designed for the application of a positive pressure inside the gas tank (10) compared with the ambient pressure outside the gas tank (10), and the gas tank (10) has two or more electrically conductive leadthroughs (20, 22, 24, 26), wherein the at least two electrically conductive leadthroughs (20, 22, 24, 26) are arranged on the gas tank (10) in an manner electrically insulated from one another, and at least one leadthrough (20, 22, 24) of the at least two electrically conductive leadthroughs (20, 22, 24, 26) is arranged on a cover segment (12) of the gas tank (10), wherein a mounting element (40) is fixed to the outer region (14) of the cover segment (12), wherein the mounting element (40) has two or more longitudinal elements (50, 52) which extend in at least one direction over the entire cover segment (12), the longitudinal elements (50, 52) are connected by two or more transverse elements (60, 62, 64, 66), and the at least one electrically conductive leadthrough of the at least two electrically conductive leadthroughs is arranged between two transverse elements (60, 62, 64, 66) of the two or more transverse elements (60, 62, 64, 66), wherein the mounting element (40) has one or more holders (30) for converters and/or busbars,
**characterized in that** the mounting element (40) has two or more anchor elements (70, 72, 74, 76), each of which extends from above the cover segment (12) along part of one or more side surfaces (18) of the gas tank (10), and the two or more anchor elements (70, 72, 74, 76) are each firmly connected to part of one or more side surfaces (18) of the gas tank (10), wherein the mounting element (40) effects stiffening of the gas tank (10) in the region of the cover segment (12).

2. Gas tank (10) according to Claim 1,
**characterized in that** the mounting element (40) has two longitudinal elements (50, 52) and three or four transverse elements (60, 62, 64, 66).

3. Gas tank (10) according to Claim 1 or 2,
**characterized in that** the firm connection between the two or more anchor elements (70, 72, 74, 76) and the one or more side surfaces (18) of the gas tank (10) is a welded connection, a screwed connection or a riveted connection or a combination of the aforementioned connections.

4. Gas tank (10) according to one or more of the preceding Claims 1 to 3,
**characterized in that** two or more anchor elements (70, 72, 74, 76) of the two or more anchor elements (70, 72, 74, 76) are each connected to one of the two or more longitudinal elements, and at least one of the two or more anchor elements (70, 72, 74, 76) is connected to a respective one of the two more transverse elements (60, 62, 64, 66) by means of a connecting element (80, 82, 84, 86).

5. Gas tank (10) according to one or more of the preceding claims,
**characterized in that** the cover segment (12) on the side of the gas tank (10) that is directed into the inner region of the cover segment (12) does not contain any bracing elements (4) which extend along the cover segment (12) from one side surface (18) of the gas tank (10) to a further side surface (19) of the gas tank (10).

6. Gas tank (10) according to one or more of the preceding claims,
**characterized in that** the mounting element (40) has two or more transport elements (90).

7. Gas tank (10) according to one or more of the preceding claims,
**characterized in that** the gas tank (10) is formed of metal and/or a metal alloy, and that the two or more leadthroughs (20, 22, 24, 26) are connected to the gas tank (10) by means of an electrically insulating element.

8. Gas tank (10) according to one or more of the preceding claims,
**characterized in that** the gas tank (10) is or can be filled with an insulating gas, and **in that** the insulating gas has one or more of the following gases SF6 and/or one or more fluoroketones and/or one or more nitriles, in particular fluorinated nitriles and/or nitrogen and/or carbon dioxide and/or oxygen and/or dry air and/or one or more olefins and/or one or more oxiranes, in particular fluorinated oxiranes.

9. Switchgear (1) having a gas tank (10) according to one or more of the preceding claims.

## Revendications

1. Réservoir (10) à gaz d'installations (1) de distribution, dans lequel le réservoir (10) à gaz est conformé pour l'application par rapport à la pression ambiante à l'extérieur du réservoir (10) à gaz, d'une surpression à l'intérieur du réservoir (10) à gaz et le réservoir (10) à gaz a deux ou plusieurs traversées (20, 22, 24, 26) conductrices de l'électricité, les au moins deux traversées (20, 22, 24, 26) conductrices de l'électricité étant montées sur le réservoir (10) à gaz d'une manière isolée électriquement les unes par rapport aux autres et au moins une traversée (20, 22, 24) parmi les au moins deux traversées (20, 22, 24, 26) conductrices de l'électricité étant montée sur un segment (12) de plafond du réservoir (10) à gaz, dans lequel un élément (40) de montage est fixé à la partie (14) extérieure du segment (12) de plafond, l'élément (40) de montage ayant deux ou plusieurs longerons (50, 52), qui s'étendent dans au moins une direction sur tout le segment (12) de plafond, les longerons (50, 52) étant assemblés par deux ou plusieurs traverses (60, 62, 64, 66) et la au moins une traversée conductrice de l'électricité des au moins deux traversées conductrices de l'électricité est disposée entre deux traverses (60, 62, 64, 66) parmi les deux ou plusieurs traverses (60, 62, 64, 66), l'élément (40) de montage ayant un ou plusieurs logements (30) pour des transducteurs et/ou des barres collectrices,
**caractérisé en ce que** l'élément (40) de montage a deux ou plusieurs éléments (70, 72, 74, 76) d'ancrage, qui s'étendent chacun d'au-dessus du segment (12) de plafond le long d'une partie d'une ou de plusieurs surfaces (18) latérales du réservoir (10) à gaz et les deux ou plusieurs éléments (70, 72, 74, 76) d'ancrage sont reliés chacun fixement à une partie d'une ou de plusieurs surfaces (18) latérales du réservoir (10) à gaz, l'élément (40) de montage provoquant un raidissement du réservoir (10) à gaz dans la partie du segment (12) de plafond.

2. Réservoir (10) à gaz suivant la revendication 1,
**caractérisé en ce que**
l'élément (40) de montage a deux longerons (50, 52) et trois ou quatre traverses (60, 62, 64, 66).

3. Réservoir (10) à gaz suivant la revendication 1 ou 2,
**caractérisé en ce que**
la liaison fixe entre les deux ou plusieurs éléments (70, 72, 74, 76) d'ancrage et la une ou les plusieurs surfaces (18) latérales du réservoir (10) à gaz est un soudage, un vissage, un rivetage ou une combinaison de ceux-ci.

4. Réservoir (10) à gaz suivant l'une ou plusieurs des revendications 1 à 3 précédentes,
**caractérisé en ce que**
deux ou plusieurs éléments (70, 72, 74, 76) d'ancrage parmi les deux ou plusieurs éléments (70, 72, 74, 76) d'ancrage sont reliés chacun à l'un des deux ou plusieurs longerons et au moins l'un des deux ou plusieurs éléments (70, 72, 74, 76) d'ancrage est relié à respectivement l'une des deux ou plusieurs traverses (60, 62, 64, 66) au moyen d'un élément (80, 82, 84, 86) de liaison.

5. Réservoir (10) à gaz suivant l'une ou plusieurs des revendications précédentes,
**caractérisé en ce que**
le segment (12) de plafond ne contient pas, du côté du réservoir (10) à gaz dirigé vers la partie intérieure du segment (12) de plafond, d'élément (4) d'entretoisement, qui s'étende le long du segment (12) de plafond d'une surface (18) latérale du réservoir (10) à gaz à une autre surface (19) latérale du réservoir (10) à gaz.

6. Réservoir (10) à gaz suivant l'une ou plusieurs des revendications précédentes,
**caractérisé en ce**
**que** l'élément (40) de montage a deux ou plusieurs éléments (90) de transport.

7. Réservoir (10) à gaz suivant l'une ou plusieurs des revendications précédentes,
**caractérisé en ce que**
le réservoir (10) à gaz est en métal et/ou en un alliage métallique et **en ce que** les deux ou plusieurs traversées (20, 22, 24, 26) sont reliées au réservoir (10) à gaz au moyen d'un élément d'isolation isolant du point de vue électrique.

8. Réservoir (10) à gaz suivant l'une ou plusieurs des revendications précédentes,
**caractérisé en ce que**
le réservoir (10) à gaz est rempli d'un gaz isolant ou peut l'être et **en ce que** le gaz isolant est l'un ou plusieurs des gaz suivant SF6 et/ou une ou plusieurs cétone fluorée et/ou un ou plusieurs nitriles, notamment des nitriles fluorés, et/ou de l'azote et/ou du dioxyde de carbone et/ou de l'oxygène et/ou de l'air sec et/ou une ou plusieurs oléfine et/ou un ou plusieurs oxiranes, notamment des oxiranes fluorés.

9. Installation (1) de distribution
ayant un réservoir (10) à gaz suivant l'une ou plusieurs des revendications précédentes.
